# FASCICULE DE BREVET EUROPEEN

(11) **EP 3 041 664 B1**
(45) Date de publication et mention de la délivrance du brevet: **04.10.2017**
(21) Numéro de dépôt: 15728499.3
(22) Date de dépôt: 10.06.2015
(51) Int. Cl.: B29C 65/48, B29C 65/60, B29C 65/50, B29C 65/72, B64C 3/26, B64C 3/18, B29L 31/30

(54) **PROCÉDÉ D'ASSEMBLAGE D'UN ENSEMBLE DE PIÈCES COMPOSITES ET ENSEMBLE OBTENU PAR UN TEL PROCÉDÉ**
VERFAHREN ZUR MONTAGE EINES SATZES VON VERBUNDWERKSTOFFTEILEN UND IN SOLCH EINEM VERFAHREN GEWONNENE ANORDNUNG
METHOD FOR ASSEMBLING A SET OF COMPOSITE PARTS, AND ASSEMBLY OBTAINED BY SUCH A METHOD

(30) Priorité: 10.06.2014 FR 1455249
(43) Date de publication de la demande: 13.07.2016
(73) Titulaire: Daher Aerospace, 41400 Saint Julien De Chedon (FR)
(72) Inventeur: BAILLY, Dominique, 44118 La Chevrolière (FR); BLANCHEGORGE, Cédric, 37400 Amboise (FR); MINARD, Elric, 37150 La Croix-en-Touraine (FR)
(74) Mandataire: Ipside
(86) Numéro de dépôt international: PCT/EP2015/062889
(87) Numéro de publication internationale: WO 2015/189242

(56) Documents cités:
- EP-A2- 2 703 283
- FR-A1- 2 576 279
- US-A- 5 847 375

## Description

L'invention concerne un procédé d'assemblage d'un ensemble de pièces composites et un ensemble structural obtenu par un tel procédé. L'invention est plus particulièrement destinée à une application aéronautique, notamment à la réalisation d'une voilure pour un aéronef.

Le document WO 2013/038012 décrit une méthode pour l'assemblage d'une structure en caisson, laquelle méthode utilise un assemblage par collage. Cette méthode d'assemblage, dite sans fixation, donne entière satisfaction et permet notamment de gagner en productivité en regard des solutions de l'art antérieur utilisant principalement le rivetage. Ce type d'assemblage, par collage, permet à la structure ainsi assemblée de drainer les efforts de service auxquels elle est soumise. Par exemple, lorsque cet assemblage est utilisé pour la constitution d'un caisson de voilure soumis à des sollicitations de torsion, les interfaces ainsi collées permettent de drainer les efforts entre la peau et la sous structure dans des conditions nominales de fonctionnement. Toutefois, pour une application aéronautique, la structure doit être tolérante aux dommages, et dans une telle configuration, une interface collée, lorsqu'elle est dégradée, n'est plus en mesure de transmettre des efforts selon un cisaillement parallèle à cet interface, et n'offre pas un chemin alternatif à la propagation du flux d'effort. Aussi, selon l'art antérieur, les ensembles vitaux pour la sécurité de l'aéronef, tels que le caisson de voilure, restent assemblés par rivetage même si les pièces élémentaires qui les constituent sont constituées de matériaux composites. En plus de l'effet défavorable sur la masse de l'ensemble ainsi obtenu, la pose de fixations conduit à de nombreux désavantages en termes de productivité et en risques de rebut. Ainsi, la pose de chaque fixation doit faire l'objet d'un perçage, réalisé alors que les pièces élémentaires sont pré-assemblées, d'une pose, d'un contrôle et, selon le cas, d'une protection vis-à-vis des risques d'étincelage si celle-ci débouche dans une zone contenant du carburant. Chacune de ces opérations est susceptible de générer un défaut, et sur une structure telle qu'un caisson de voilure, plusieurs milliers de fixations sont posées, sachant que la pose de certaines de ces fixations doit être réalisée en n'ayant accès que d'un côté de la peau ou en ne disposant que d'un accès réduit sur l'autre face, du fait de la fermeture, par ladite peau, de la structure en caisson.

Le document EP 2 703 283 décrit une structure composite de voilure d'aéronef assemblée par collage.

Le document FR 2 576 279 décrit la structure d'une voilure constituée d'une matériau composite et comprenant une liaison d'un longeron aux peaux constituant les surfaces aérodynamiques par des équerres.

Le document US 5 847 375 décrit un procédé d'assemblage d'une structure de raidisseurs constitués d'un matériau composite à matrice thermoplastique par soudure.

L'invention vise à résoudre les inconvénients de l'art antérieur et concerne à cette fin un procédé pour l'assemblage d'une structure en caisson comprenant des pièces élémentaires, assemblées selon une sous-structure de raidisseurs, et des peaux, la sous-structure et les peaux étant constituées d'un matériau composite à matrice polymère, lequel procédé comprend des étapes consistant à :
a. dimensionner la structure en caisson en fonction des sollicitations subies et pour un assemblage collé de ladite structure ;
b. obtenir une cartographie des sollicitations de la structure et définir un premier seuil de sollicitation en fonction d'une probabilité d'endommagement de la structure ;
c. assembler la sous-structure et les peaux par collage ;
d. dans les zones de la structure caisson assemblée où le premier seuil de sollicitation est atteint, appliquer une contre-stratification recouvrant les pièces élémentaires assemblées.

Dans tout le texte, le terme « zone » désigne une portion alvéolaire de la structure en caisson, portion délimitée par les peaux et les raidisseurs.

Ainsi ladite contre-stratification permet de créer un ensemble entre la peau et plusieurs raidisseur et offre un chemin alternatif pour le drainage des efforts entre lesdits raidisseurs en cas de défaut au niveau du collage, sans présenter les inconvénients des fixations traversantes en termes de masse, de concentration de contraintes, et de risque pour l'étanchéité et l'étincelage.

L'invention est avantageusement mise en oeuvre selon les modes de réalisation exposés ci-après lesquels sont à considérer individuellement ou selon toute combinaison techniquement opérante.

Avantageusement le procédé objet de l'invention comporte des étapes consistant à:
e. déterminer sur la cartographie obtenue à l'étape b) les zones soumises à un deuxième seuil de sollicitation, supérieur au premier seuil, en fonction d'une probabilité d'endommagement de la structure assemblée ;
f. dans les zones de la structure assemblée où le deuxième seuil est atteint, insérer des fixations traversantes entre les pièces élémentaires assemblées.

Ainsi, lesdites fixations apportent une sécurité supplémentaires mais leur utilisation reste limitée aux zones soumises à de fortes sollicitations ou qui requièrent une tolérance aux dommages dans des conditions sévères.

Avantageusement, l'opération de contre-stratification d'une zone, comprend la pose d'un pli préimprégné sur la face de la peau collée avec des raidisseurs de la sous-structure, lequel pli couvre une portion de la peau et une portion des semelles des raidisseurs dans ladite zone. Ainsi, la surface du pli est sensiblement celle de la zone considérée et la masse ajoutée est réduite. La contre-stratification coopère avec le collage entre les semelles des raidisseurs et la peau, afin drainer le flux d'efforts. L'absence de fixations permet d'utiliser ladite zone comme réservoir de carburant en évitant le traitement spécifique des fixation en regard de l'étanchéité et du risque d'étincelage.

L'invention concerne également une voilure pour un aéronef, dont la structure en caisson est obtenue par le procédé objet de l'invention selon l'un quelconque de ses modes de réalisation, ledit caisson comprenant une portion centrale de liaison avec le fuselage, et comportant des zones de contre-stratification aux extrémités. Ainsi le renforcement en contre-stratification des zones aux extrémités de la voilure permet de renforcer la résistance de la structure en caisson à l'initiation du pelage entre la peau et les raidisseurs.

Avantageusement, la voilure objet de l'invention, comporte une zone assemblée par des fixations dans la portion centrale. Ainsi cette zone, qui est la plus chargée et la plus exposée aux dommages est plus particulièrement renforcée.

Selon un mode de réalisation particulier, la voilure objet de l'invention, comporte une zone assemblée par des fixations aux extrémités de la structure en caisson. Ainsi cette zone est renforcée de manière supplémentaire en fonction des sollicitations auxquelles elle est soumise.

Selon ce dernier mode de réalisation, la voilure objet de l'invention comporte une zone assemblée uniquement par collage entre la portion centrale et les zones d'extrémités de la structure en caisson. Lesdites zones ne comprenant pas de fixation sont plus particulièrement destinées au stockage du carburant.

L'invention concerne également un aéronef comprenant un caisson une voilure selon l'un quelconque des modes de réalisation exposés ci-avant. L'utilisation d'une telle voilure permet de réduire à la fois : la masse, le coût et le temps de fabrication d'un tel aéronef.

L'invention est exposée ci-après selon ses modes de réalisation préférés, nullement limitatifs, et en référence aux figures 1 à 4 dans lesquelles :
- la figure 1 montre selon une vue en perspective un exemple de réalisation d'une voilure selon l'invention ;
- la figure 2 représente, selon une vue en perspective, la voilure de la figure 1 dont la face extrados a été retirée sur une demi voilure ;
- la figure 3 est une vue de détail selon Z repéré figure 2 de la voilure selon cet exemple de réalisation ;
- et la figure 4 est une vue de détail selon Y, repéré figure 2, de l'extrémité de la voilure selon un exemple de réalisation de la voilure objet de l'invention.

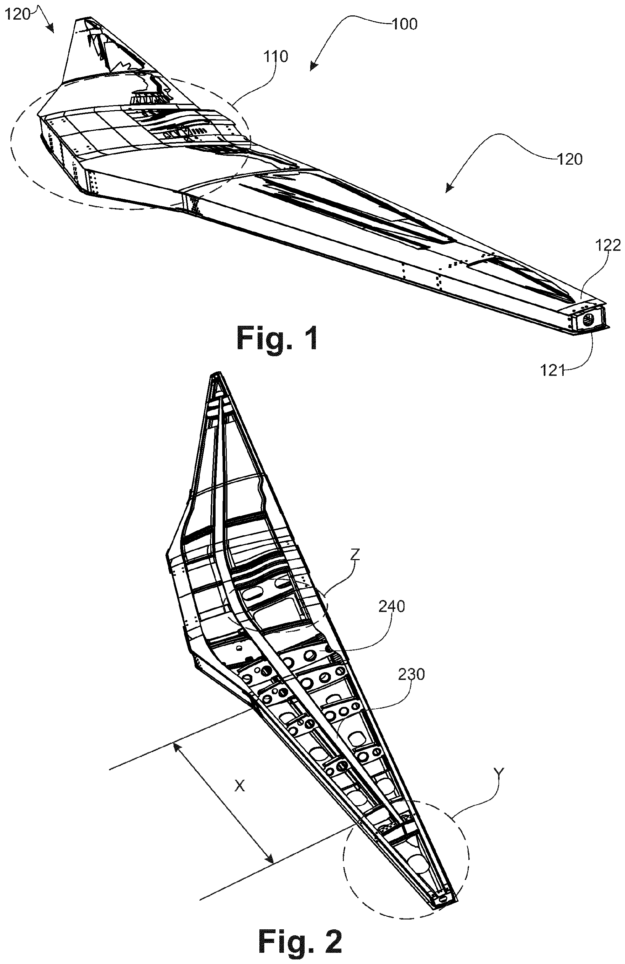

Figure 1, selon un exemple de réalisation la voilure (100) objet de invention comprend une portion (110) dite centrale laquelle portion réalise la liaison entre ladite voilure et le fuselage de l'aéronef (non représenté). De chaque côté de cette structure centrale, s'étendent les ailes (120). Chaque aile comporte une face (121) intrados et une face extrados (122) recouverte par une peau. À titre d'exemple non limitatif, ladite voilure a une longueur de 14 mètres pour une largeur maximum d'environ 2 mètres à l'emplanture.

Figure 2, lesdites faces (121, 122) intrados et extrados sont constituées par des panneaux de peau composites qui sont fixés sur une structure en caisson comprenant des raidisseurs, dits longerons (230) et des raidisseurs, dits nervures (240), de sorte que ces raidisseurs constituent, avec les peaux, une structure en caisson comprenant des alvéoles. Le terme « peau » s'applique à une pièce élémentaire dont l'épaisseur est inférieure à 30 fois la plus petite de ses autres dimensions. D'un point de vue mécanique, une telle peau est assimilable à une coque, un raidisseur (230, 240) étant assimilable à une poutre. Selon cet exemple de réalisation les raidisseurs ainsi que les peaux sont constitués d'une matériau composite stratifié comprenant des fibres continues dans une matrice polymère. À titre d'exemple non limitatif il s'agit de fibres de carbone dans une matrice thermodurcissable comme une résine époxyde ou dans une matrice thermoplastique constituée de polyétheréthercétone (PEEK), de polysulfure de phénylène (PPS) ou de polyétherimide (PEI). Selon leur nature, les longerons et les nervures sont assemblés entre eux par cocuisson, soudage, collage voire par des fixations, les interfaces d'assemblage de cette structure en grille étant accessibles avant installation des peaux. Les peaux sont assemblées aux raidisseurs selon un procédé de collage tel que décrit dans le document WO 2013/038012.

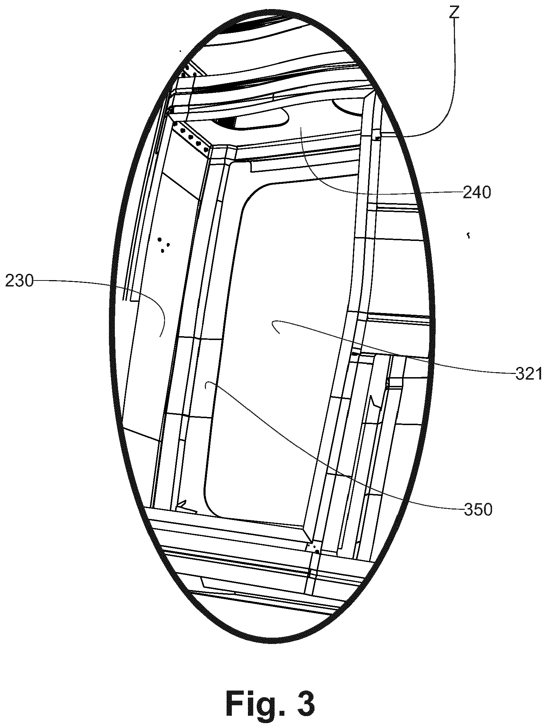

Figure 3, selon un exemple de réalisation, l'assemblage de la peau (321) constituant l'intrados avec les semelles des raidisseurs (230, 240) dans une zone centrale de la voilure, comprend une contre-stratification (350) s'étendant entre ladite semelle du raidisseur et la peau (321). À titre d'exemple non limitatif, la contre-stratification (350) comprend deux plis de fibres de carbone pré-imprégnées. Ladite contre-stratification (350) est installée après le collage de la peau sur les raidisseurs. Elle est avantageusement polymérisée en même temps que la cuisson de la colle.

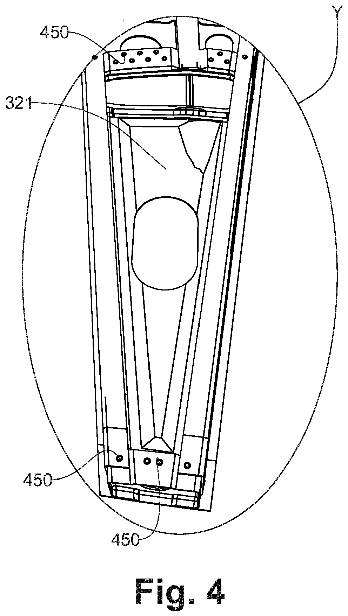

Figure 4, selon un exemple de réalisation, l'extrémité (Y) de l'aile, comprend à la fois une contre-stratification (350), représentée ici entre un raidisseur et la peau (321) intrados, et une liaison parfixations (450) traversantes entre les raidisseurs et les peaux, ici le panneau extrados (non représenté). Le même type d'assemblage combiné est utilisé dans les zones chargées de la portion centrale. Selon des exemples de réalisation non limitatifs, lesdites fixations sont des rivets à queue de traction et bague de sertissage connus sous le nom commercial de LGP, ou une fixation aveugle à boulon. Préférentiellement lesdites fixations sont constituées d'un alliage de titane.

Le même type d'assemblage combinant, ou non, fixations et contre-stratification est utilisé dans la partie centrale (Z) de voilure, partie fortement chargée et exposée, du fait de la proximité de la case de train de l'aéronef.

En revenant à la figure 2, selon cet exemple de réalisation, les zones comprises dans la portion intermédiaire (X) entre la portion centrale (Z) et l'extrémité (Y) sont assemblées uniquement par collage des peaux sur les raidisseurs.

Le choix du mode d'assemblage selon la zone considérée est déduit d'une simulation numérique des sollicitations subies par la voilure dans des cas de chargement déterminés, simulation réalisée par exemple au moyen d'un logiciel de calcul par éléments finis. Les zones subissant des sollicitations dépassant un premier seuil sont renforcées par une contre-stratification et les zones dépassant un deuxième seuil de sollicitation sont renforcées par la pose de fixations entre la peau et les raidisseurs concernés. Dans l'exemple de l'application du procédé objet de l'invention à la réalisation d'une voilure d'aéronef, les zones particulièrement chargées se situent dans la portion centrale de liaison avec le fuselage et sur la nervure d'extrémité qui ferme le bout de l'aile et assure la liaison avec l'ailerette, ou « *winglet* », d'extrémité de voilure.

En comparaison des solutions entièrement rivetées de l'art antérieur, le procédé objet de l'invention permet de diviser par un facteur compris entre 10 et 100 le nombre de fixations posées, à performances mécaniques égales, pour une telle voilure.

Le procédé objet de l'invention est plus particulièrement adapté à la réalisation d'une voilure d'aéronef, toutefois l'homme du métier en adapte aisément les principes à d'autres applications comprenant des contraintes similaires d'utilisation.

## Revendications

1. Procédé pour l'assemblage d'une structure (100) en caisson comprenant des pièces élémentaires (230, 240, 321), assemblées selon une sous-structure de raidisseurs (230, 240), et des peaux (321), la sous-structure et les peaux étant constituées d'un matériau composite à matrice polymère, lequel procédé comprend des étapes consistant à :
a. dimensionner la structure en caisson en fonction des sollicitations subies et pour un assemblage collé ;
b. obtenir une cartographie des sollicitations de ladite structure et définir un premier seuil de sollicitation en fonction d'une probabilité d'endommagement de la structure ;
c. assembler la sous-structure et les peaux par collage; **caractérisé en ce que** il comprend aussi l'étape consistant à:
d. dans les zones de la structure en caisson assemblée, où le premier seuil de sollicitation est atteint, appliquer une contre-stratification (350) recouvrant les pièces élémentaires assemblées.

2. Procédé selon la revendication 1, comprenant des étapes consistant à :
e. déterminer sur la cartographie obtenue à l'étape b) les zones soumises à un deuxième seuil de sollicitation, supérieur au premier seuil, en fonction d'une probabilité d'endommagement de la structure assemblée ;
f. dans les zones de la structure assemblée où le deuxième seuil est atteint, insérer des fixations (450) traversantes entre les pièces élémentaires assemblées.

3. Procédé selon la revendication 1, dans lequel l'opération de contre-stratification d'une zone, comprend la pose d'un pli pré-imprégné sur la face de la peau (321) collée avec des raidisseurs (20, 240) de la sous-structure, lequel pli (350) couvre une portion de la peau et une portion des semelles des raidisseurs dans ladite zone.

4. Voilure (100) pour un aéronef, comprenant une structure en caisson, lequel caisson est obtenu par un procédé selon la revendication 2, ladite voilure comportant une portion centrale (110) faisant liaison avec le fuselage, et des zones de contre-stratification (350) aux extrémités (Y) de ladite structure en caisson.

5. Voilure selon la revendication 4, comportant une zone assemblée par des fixations (450) dans la portion centrale.

6. Voilure selon la revendication 5, comportant une zone assemblée par des fixations (450) aux extrémités de la structure en caisson.

7. Voilure selon la revendication 6, comportant une zone assemblée uniquement par collage entre la portion centrale et les zones d'extrémités.

8. Aéronef comportant une voilure (100) selon la revendication 4.

## Patentansprüche

1. Verfahren zum Zusammenbau einer Kastenstruktur (100), die elementare Teile (230, 240, 321), die gemäß einer Versteifungsunterstruktur (230, 240) zusammengebaut sind, und Häute (321) umfasst, wobei die Unterstruktur und die Häute aus einem Verbundmaterial mit Polymermatrix gebildet sind, wobei das Verfahren die folgenden Schritte umfasst:
a. Dimensionieren der Kastenstruktur in Abhängigkeit von erfahrenen Beanspruchungen und für eine Verklebung,
b. Erhalten einer Kartographie der Beanspruchungen der Struktur und Festlegen einer ersten Beanspruchungsgrenze in Abhängigkeit von einer Beschädigungswahrscheinlichkeit der Struktur,
c. Verkleben der Unterstruktur und der Häute,
**dadurch gekennzeichnet, dass** es auch den folgenden Schritt umfasst:
d. Aufbringen, in den Zonen der zusammengebauten Kastenstruktur, wo die erste Beanspruchungsgrenze erreicht wird, einer Gegenschichtung (350), die die zusammengebauten elementaren Teile bedeckt.

2. Verfahren nach Anspruch 1, umfassend die folgenden Schritte:
e. Bestimmen auf der in Schritt b) erhaltenen Kartographie der Zonen, die einer zweiten Beanspruchungsgrenze ausgesetzt werden, die höher als die erste Grenze ist, in Abhängigkeit von einer Beschädigungswahrscheinlichkeit der zusammengebauten Struktur,
f. Einsetzen, in die Zonen der zusammengebauten Struktur, wo die zweite Grenze erreicht wird, von zwischen den zusammengebaut elementaren Teilen durchgehenden Befestigungen (450).

3. Verfahren nach Anspruch 1, wobei der Vorgang der Gegenschichtung einer Zone das Anbringen einer vorimprägnierten Falte auf der Seite der Haut (321), die mit Versteifungen (20, 240) der Unterstruktur verklebt ist, wobei die Falte (350) einen Abschnitt der Haut und einen Abschnitt der Sohlen der Versteifungen in der Zone bedeckt, umfasst.

4. Tragfläche (100) für ein Luftfahrzeug, die eine Kastenstruktur umfasst, wobei der Kasten mittels eines Verfahrens nach Anspruch 2 erhalten wird, wobei die Tragfläche einen zentralen Abschnitt (110), der eine Verbindung mit dem Rumpf herstellt, und Gegenschichtungszonen (350) an den Enden (Y) der Kastenstruktur aufweist.

5. Tragfläche nach Anspruch 4, die eine Zone aufweist, die mittels Befestigungen (450) im zentralen Abschnitt montiert ist.

6. Tragfläche nach Anspruch 5, die eine Zone aufweist, die mittels Befestigungen (450) an den Enden der Kastenstruktur montiert ist.

7. Tragfläche nach Anspruch 6, die eine Zone aufweist, die nur mittels Kleben zwischen dem zentralen Abschnitt und den Endzonen verbaut ist.

8. Luftfahrzeug, das eine Tragfläche (100) nach Anspruch 4 aufweist.

## Claims

1. A method for assembling a box structure (100) comprising elementary parts (230, 240, 321), assembled along an understructure of stiffeners (230, 240), and skins (321), wherein the understructure and skins are made of composite material with a polymer matrix, and wherein the method includes the steps of:
a. sizing the box structure for the loads to which it is subjected and for a glued assembly;
b. obtaining a map of the loads on said structure and defining a first load limit depending on the probability of the structure being damaged;
c. assembling the understructure and the skins by gluing them;
**characterized in that** it further comprises the step of :
d. in areas of the assembled box structure where the first load limit is reached, applying an additional layer (350) that covers the assembled elementary parts.

2. The method according to claim 1, comprising the steps of:
e. on the map obtained in step (b), determining the areas subjected to a second load limit, greater than the first limit, depending on the probability of the assembled structure being damaged;
f. in the areas of the assembled structure where the second load limit is reached, inserting through fasteners (450) between the assembled elementary parts.

3. The method according to claim 1, wherein the operation of adding a layer in an area comprises placing a prepregged ply on the face of the skin (321) glued to stiffeners (20, 240) of the understructure, which ply (350) covers part of the skin and part of the base plates of the stiffeners in said area.

4. An aircraft wing (100) comprising a box structure, wherein said box is obtained using a method according to claim 2, and wherein said wing comprises a central portion (110) connecting it to the fuselage, and areas with additional layers (350) at the ends (Y) of said box structure.

5. A wing according to claim 4 comprising an area assembled with fasteners (450) in the central portion.

6. A wing according to claim 5 comprising an area assembled by fasteners (450) at the ends of the box structure.

7. A wing according to claim 6 comprising an area that is assembled only by gluing between the central portion and the end areas.

8. Aircraft comprising a wing (100) according to claim 4.
